**Europäisches Patentamt**

**European Patent Office**

**Office européen des brevets**

(11) Veröffentlichungsnummer: **0 079 069**
A2

(12) EUROPÄISCHE PATENTANMELDUNG

(21) Anmeldenummer: 82110262.1

(22) Anmeldetag: 06.11.82

(51) Int. Cl.³: **A 01 K 73/06**
**B 66 D 1/50**

(30) Priorität: 07.11.81 DE 3144392

(43) Veröffentlichungstag der Anmeldung:
18.05.83 Patentblatt 83/20

(84) Benannte Vertragsstaaten:
BE FR GB NL SE

(71) Anmelder: BROWN, BOVERI & CIE Aktiengesellschaft
Kallstadter Strasse 1
D-6800 Mannheim 31(DE)

(72) Erfinder: Horschler, Bruno
Timmermannsweg 10
D-2000 Schenefeld(DE)

(72) Erfinder: Klemt, Michael
Alte Allee 42
D-2055 Wohltorf(DE)

(72) Erfinder: Vorkefeld, Karlheinz
Langenharmer Weg 95f
D-2000 Norderstedt(DE)

(72) Erfinder: Walther, Günther
Bahnhofstrasse 45
D-6149 Rimbach(DE)

(74) Vertreter: Kempe, Wolfgang, Dr. et al,
c/o Brown, Boveri & Cie AG Postfach 351
D-6800 Mannheim 1(DE)

(54) Verfahren zur Regelung der Haupttrommeln eines Hecktrawlers.

(57) Die Erfindung bezieht sich auf eine Einrichtung für das Fischen mit Split-Trawl-Winden oder Monoblockwinden auf Hecktrawlern (24). Die Ausführungsform mit Split-Trawl-Winden besitzt steuerbordseitig und backbordseitig je eine Winde (25,31) mit je einem eigenen Motor (26A,32A), einem eigenen Getriebe (27,33), einer Kupplung (28A,34A), einer Haupttrommel (28B,34B) und einer Bandbremse (28C,34C). Die Ausführungsform mit Monoblockwinde (39) besitzt einen gemeinsamen Motor (26) ein gemeinsames Getriebe (27), jedoch zwei Kupplungen (28A,34A) und zwei Haupttrommeln (28B,34B) mit Bandbremsen (28C,34C). Während des Auslegen der mit dem Schleppnetz (37) verbundenen Kurrleinen (29,35), des automatischen Trawlbetriebs sowie des Seileinholens werden die ausgeworfenen Seillängen jeweils erfaßt. Der automatische Trawlbetrieb erfolgt innerhalb eines durch vorgebbare Seillängen begrenzten Bereiches. Eine Trommel (34B) dient als Leittrommel, die andere Trommel (28B) als Folgetrommel. Die Leittrommel wird über ihre einstellbare Bandbremse (34C) gebremst. Bei gleichem Seilzug beider Kurrleinen ist auch die Folgetrommel über ihre Bandbreme (28C) gebremst. Bei ungleichem Seilzug wird det Motor (26,26A) der Folgetrommel eingeschaltet und eingekuppelt und läuft zur Erzielung eines gleichen Seilzuges im Rechtslauf bzw. Linkslauf. Bei Überschreiten der vorgegebenen Grenzlängen erfolgen Signale zur Anpassung bzw. Reduzierung der Schiffsgeschwindigkeit. Durch den gleichen Seilzug beider Kurrleinen wird das Schleppnetz während des gesamten Schleppvorgangs auch bei Kurvenfahrt offengehalten.

./...

EP 0 079 069 A2

Fig. 2

B R O W N , B O V E R I & C I E    AKTIENGESELLSCHAFT
Mannheim                                    19. Okt. 1982
Mp.-Nr. 675/81                              ZPT/P3-Pn/Bt

Verfahren zur Regelung der Haupttrommeln eines
Hecktrawlers

Die Erfindung bezieht sich auf ein Verfahren zur Regelung der Haupttrommeln eines Hecktrawlers gemäß dem
Oberbegriff des Anspruches 1.

Eine solche Einrichtung ist aus HANSA-Schiffahrt-Schiffbau-Hafen, 113. Jahrg. 1974, Nr. 12, Seiten 1080 bis
1087 bekannt. Das Fischen mit Hecktrawlern ist allgemein
auch aus Meyers Enzyklopädisches Lexikon, Bibliographisches Institut Mannheim, 1978, Band 21, Seite 121 bis
122, Band 23, Seite 670 und Band 8, Seite 835 bis 836
bekannt. Es gibt zwei verschiedene Systeme von Fischnetzwinden, die Monoblockwinden, sie bestehen aus einem
Antriebsmotor, einem Getriebe und zwei Haupttrommeln,
und die Split-Winden, die aus zwei getrennten Winden mit
eigenem Getriebe, Motor und eigener Trommel bestehen.
Welches System verwendet wird, hängt von der Art des
Fischfanges bedingt durch Klimaverhältnisse, Bodenbeschaffenheit, Art der Fische etc. ab. Bei beiden Systemen ist es für den Schleppvorgang jedoch von großer

675-81 2 0079069

Wichtigkeit, daß das Netz während des Schleppvorganges offengehalten wird und nicht etwa bei Kurvenfahrt des Hecktrawlers oder Seitenströmung "zusammenklappt".

Der Erfindung liegt die Aufgabe zugrunde, ein Verfahren zur Regelung der Haupttrommeln eines Hecktrawlers anzugeben, das ein automatisches Trawlen ohne "Zusammenklappen" des Schleppnetzes gewährleistet.

Diese Aufgabe wird durch die im Anspruch 1 gekennzeichneten Merkmale gelöst.

Die mit der Erfindung erzielbaren Vorteile liegen insbesondere darin, daß das Schleppnetz infolge des gleichen Seilzuges von Steuerbord- und Backbord-Trommel während des gesamten Schleppvorganges auch bei Kurvenfahrt offengehalten wird, was einen erheblich vergrößerten Fischfang zur Folge hat. Desweiteren werden das Geschirr und das Fischnetz geschont.

Ein Ausführungsbeispiel der Erfindung ist im folgenden anhand der Zeichnungen erläutert.

Es zeigen:

Fig. 1 eine Einrichtung für das Fischen auf Hecktrawlern,

Fig. 2 einen Hecktrawler mit Split-Trawl-Winden und ausgelegtem Schleppnetz,

Fig. 3 die vorgebbaren Seillängen des Steuerbord-Seiles,

Fig. 4 einen Hecktrawler mit Monoblockwinde.

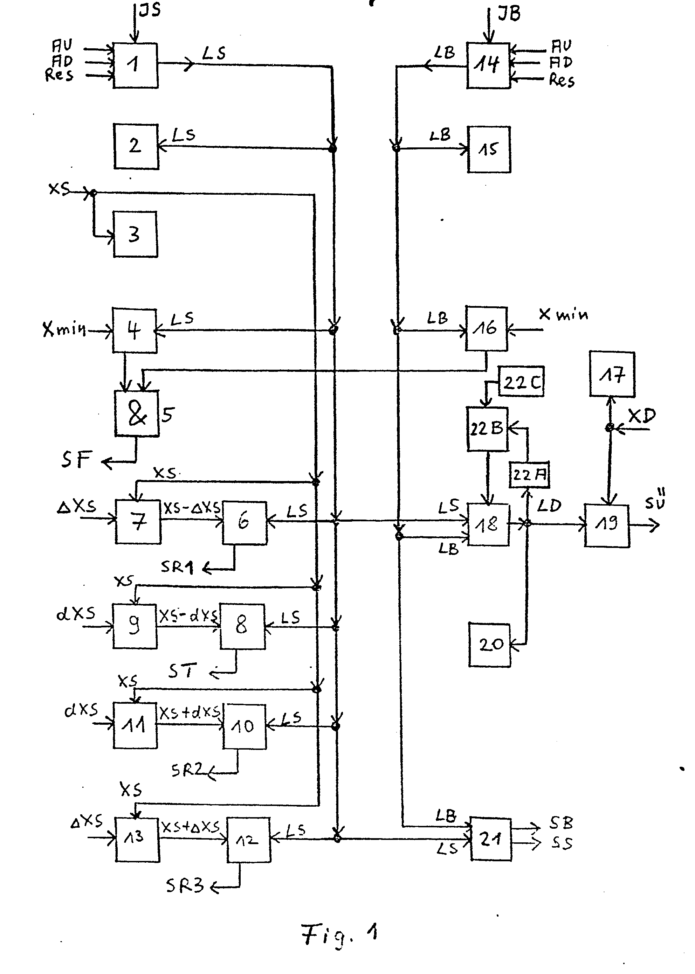

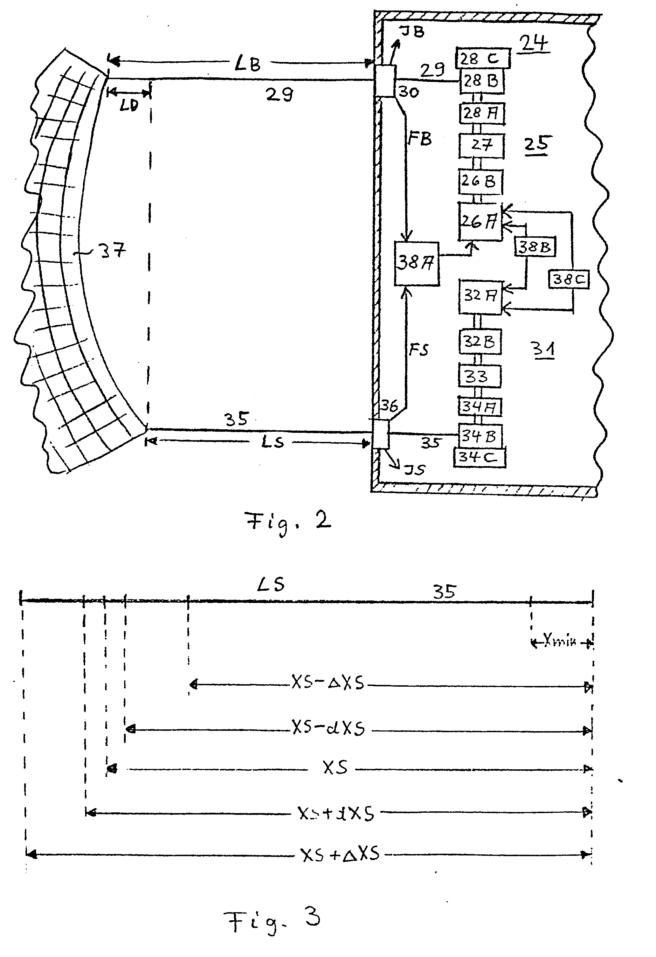

In Fig. 1 ist die erfindungsgemäße Einrichtung für das Fischen mit Split-Trawl-Winden und Monoblockwinden auf Hecktrawlern dargestellt. Ein Hauptzähler 1 für die Steuerbordseite empfängt eingangsseitig Impulse IS von der Steuerbord-Ablaufrolle (in den Fig. 2 und 4 mit 36 bezeichnet). Es ist Auf- und Abwärtszählen möglich. Der Zähler 1 ist eingangsseitig ferner mittels positiver Justiersignale AU zum Erhöhen des Zählerstandes, mittels negativer Justiersignale AD zum Verringern des Zählerstandes sowie mittels Rücksetzsignalen Res zum Setzen des Zählers auf Null beaufschlagbar. Ausgangsseitig gibt der Hauptzähler 1 entsprechend der eingehenden Impulse IS die gemessene ausgeworfene Seillänge ·LS der Steuerbordseite ab. Die gemessene ausgeworfene Seillänge LS der Steuerbordseite wird mit Hilfe einer Anzeigevorrichtung 2 zur Anzeige gebracht.

Die vorgegebene auszuwerfende Seillänge XS der Steuerbordseite wird eingestellt und mit Hilfe einer Anzeigevorrichtung 3 angezeigt.

Einem Vergleicher 4 liegen eingangsseitig die gemessene Seillänge LS der Steuerbordseite sowie eine vorgegebene Seillänge $X_{min}$ an (z.B. $X_{min}$ = 50m). Die Seillänge $X_{min}$ ist gleich dem Sicherheitsabstand zur Schiffsschraube, bis zu dem das Seil "von Hand" auszulegen ist. Ausgangsseitig ist der Vergleicher 4 mit dem ersten Eingang eines UND-Gliedes 5 verbunden.

Einem Vergleicher 6 werden eingangsseitig die gemessene Seillänge LS sowie der Wert XS − $\triangle$XS zugeleitet. Ausgangsseitig gibt der Vergleicher 6 gegebenenfalls ein Signal SR1 zur Anpassung der Schiffsgeschwindigkeit an den automatischen Trawlbetrieb ab. Der Wert XS − $\triangle$XS wird von einem Subtrahierer 7 gebildet, dem eingangsseitig das Signal XS sowie eine vorgegebene Sicherheits-Seillänge $\triangle$ XS zur Anpassung der Schiffsgeschwindigkeit anliegen (z.B. $\triangle$XS = 100m).

Einem Vergleicher 8 werden eingangsseitig die gemessene ausgeworfene Seillänge LS sowie der Wert XS - dXS zugeleitet. Ausgangsseitig gibt der Vergleicher 8 gegebenenfalls ein Signal ST für automatischen Trawlbetrieb ab. Der Wert XS - dXS wird von einem Subtrahierer 9 gebildet, dem eingangsseitig das Signal XS sowie ein vorgegebener Grenzwert dXS für automatischen Trawlbetrieb (z.B. dXS = 15m) anliegen.

Einem Vergleicher 10 werden eingangsseitig die gemessene ausgeworfene Seillänge LS sowie der Wert XS + dXS zugeleitet. Ausgangsseitig gibt der Vergleicher 10 gegebenenfalls ein Signal SR2 zur Reduzierung der Schiffsgeschwindigkeit ab. Der Wert XS + dXS wird von einem Addierer 11 gebildet, dem eingangsseitig das Signal XS sowie der Grenzwert dXS anliegen.

Einem Vergleicher 12 werden eingangsseitig die gemessene ausgeworfene Seillänge LS sowie der Wert XS + $\Delta$ XS zugeleitet. Ausgangsseitig gibt der Vergleicher 12 gegebenenfalls ein Signals SR3 zur weiteren Reduzierung der Schiffsgeschwindigkeit ab. Der Wert XS + $\Delta$ XS wird von einem Addierer 13 gebildet, dem eingangsseitig das Signal XS sowie die vorgegebene Sicherheits-Seillänge $\Delta$ XS anliegen.

Ein Hauptzähler 14 für die Backbordseite empfängt eingangsseitig Impulse IB von der Backbord-Ablaufrolle (in den Fig. 2 und 4 mit 30 bezeichnet). Es ist Auf- und Abwärtszählen möglich. Der Zähler 14 ist eingangsseitig ferner mittels positiver Justiersignale AU zum Erhöhen des Zählerstandes, mittels negativer Justiersignale AD zum Verringern des Zählerstandes sowie mittels Rücksetzsignalen Res zum Setzen des Zählers auf Null beaufschlagbar.

Ausgangsseitig gibt der Hauptzähler 14 entsprechend der eingehenden Impulse IB die gemessene ausgeworfene Seillänge LB der Backbordseite ab. Die Seillänge LB der Backbordseite wird mit Hilfe einer Anzeigevorrichtung 15 zur Anzeige gebracht.

Einem Vergleicher 16 liegen eingangsseitig die gemessene Seillänge LB der Backbordseite sowie die vorgegebene Seillänge $X_{min}$ an, bis zu der das Seil "von Hand" auszulegen ist. Ausgangsseitig ist der Vergleicher 16 mit dem zweiten Eingang des UND-Gliedes 5 verbunden. Das UND-Glied 5 gibt ausgangsseitig bei Vorliegen zweier positiver Eingangssignale ein Freigabesignal SF für das automatische Auslegen des Seiles ab.

Die vorgegebene zulässige Seillängendifferenz XD zwischen der Seillänge LS der Steuerbordseite und der Seillänge LB der Backbordseite (z.B. XD = 200m) wird eingestellt und mittels einer Anzeigevorrichtung 17 zur Anzeige gebracht.

Einem Subtrahierer 18 liegen eingangsseitig die Seillängen LS und LB an. Der Subtrahierer 18 bildet die Differenz LD = |LS - LB|, wobei mit LD die absolute gemessene Seillängendifferenz Steuerbordseite/Backbordseite bezeichnet ist. Die Seillängendifferenz LD wird einem Vergleicher 19 zugeleitet, dem eingangsseitig die vorgegebene zulässige Seillängendifferenz XD anliegt. Der Vergleicher 19 gibt gegebenenfalls ein Signal SÜ bei Seillängendifferenzüberschreitung ab. Die gemessene Seillängendifferenz LD gelangt mit Hilfe einer Anzeigevorrichtung 20 zur Anzeige.

Einem Vergleicher 21 liegen eingangsseitig die gemessenen Seillängen der Steuerbordseite LS und der Backbordseite LB an. Der Vergleicher 21 gibt ausgangsseitig

675/81                     6               **0079069**

ein Signal SS ab, falls die Steuerbord-Seillänge LS größer als die Backbord-Seillänge LB ist und er gibt ein Signal SB ab, falls die Backbord-Seillänge LB größer als die Steuerbord-Seillänge LS ist.

Es ist ferner ein Schalter 22A vorgesehen, an dessen Eingang die gemessene Seillängendifferenz LD ansteht. Bei Betätigung des Schalters 22A wird die momentane Seillängendifferenz LD auf den Eingang eines Zählers/Speichers 22B durchgeschaltet. Bei Betätigung eines mit dem Zähler/Speicher 22B verbundenen Tasters 22C wird die momentane Seillängendifferenz LD im Zähler/Speicher 22B gespeichert und in den Subtrahierer 18 gegeben. Am Ausgang des Subtrahierers 18 wird LD zu Null. Bei einer weiteren Abweichung zwischen den Seillängen LB und LS ergibt sich die um den abgespeicherten Wert verfälschte Differenz LD. Bei Rückschaltung des Schalters 22A wird der Inhalt des Zähler/Speichers 22B gelöscht und die Diferenzverfälschung von LD wird aufgehoben.

Zur synchronisierten Arbeitsweise der verschiedenen Bauteile der Einrichtung ist ein nicht dargestellter zentraler Taktgeber vorgesehen, der den Bauteilen Taktimpulse zuleitet. Die Verarbeitung der Signale erfolgt vorzugsweise im BCD-Code (Dual-codierte Dezimalziffern). Zur Vereinfachung des Funktionsablaufes sind an entsprechender Stelle (z.B. zwischen Hauptzähler und Vergleicher) hier nicht dargestellte Parallel-Serien-Umsetzer vorgesehen. Desweiteren sind beispielsweise zur Vorgabe von LS, LB und XS Zeitmultiplex-Verfahren einsetzbar.

In Fig. 2 ist allgemein ein Hecktrawler 24 mit Split-Trawl-Winden und ausgelegtem Schleppnetz dargestellt. Der Hecktrawler 24 besitzt sowohl auf der Backbordseite als auch auf der Steuerbordseite getrennte Split-Trawl-Winden, wobei die steuerbordseitige Splitwinde als Führungswinde und die backbordseitige Winde als Folgewinde arbeitet. Die Splitwinde 25 auf der Backbordseite besteht im wesentlichen aus einem Motor 26A, einer am Motor angebauten Bremse 26b, einem Getriebe 27, einer Kupplung 28A sowie einer Haupttrommel 28B mit angebauter pneumatisch steuerbarer Bandbremse 28C. Die Haupttrommel 28B dient zur Auf/Abwicklung der backbordseitigen Kurrleine 29. Die Kurrleine 29 wird über eine Backbord-Ablaufrolle 30 geführt, wobei die Ablaufrolle 30 bei Auf/Abwicklung des Seiles Impulse IB zum Hauptzähler 14 liefert. An der Ablaufrolle 30 wird außerdem ein dem backbordseitigen Seilzug proportionaler Zug FB gemessen und in einen Zugregler 38A eingegeben.

Die Splitwinde 31 auf der Steuerbordseite besteht im wesentlichen aus einem Motor 32A, einer am Motor angebauten Bremse 32B, einem Getriebe 33, einer Kupplung 34A sowie einer Haupttrommel 34B mit angebauter pneumatisch steuerbaren Bandbremse 34C zur Auf/Abwicklung der steuerbordseitigen Kurrleine 35. Die Kurrleine 35 wird über eine Steuerbord-Ablaufrolle 36 geführt, wobei die Ablaufrolle 36 Impulse IS zum Hauptzähler 1 liefert. An der Ablaufrolle 36 wird außerdem ein dem steuerbordseitigen Seilzug proportionaler Zug FS gemessen und in den Zugregler 38A eingegeben.

An den Kurrleinen 29 und 35 ist ein Schleppnetz 37 befestigt. Zwei an den Seiten des Netzes 37 montierte, nicht dargestellte Scheerbretter sorgen für das Offenhalten des Netzes während der Geradeausfahrt des Schiffes ohne Störeinflüsse.

Die Motoren 26A und 32A werden vorzugsweise über geregelte Stromrichtersätze gespeist. Eine Speisung über Ward-Leonard-Umformer ist ebenfalls möglich. Zur Regelung der Motoren 26A und 32A beim automatischen Auswerfen bzw. Einholen des Netzes werden gemeinsame Zug-Sollwerte für die Drehzahl und den Strom über einen Drehzahl-Sollwertgeber 38B und einen Strom-Sollwertgeber 38C vorgegeben.

Während des automatischen Trawlens ist der Zug des Steuerbordseiles 35 der Sollwert für den Zug des Backbordseiles 29. Der steuerbordseitige Motor 32A ist hierbei mit der Bremse 32B festgebremst. Die Haupttrommel 34B ist vom Getriebe 33 durch die Kupplung 34A abgetrennt und wird von der Bandbremse 34C gehalten. Die Bandbremse 34C wird dabei auf den gewünschten Seilzug eingestellt. Überschreitet der gemessene Seilzug FS den eingestellten Seilzug, so rutscht die Bandbremse 34C durch (vergleichbar mit einer Rutschkupplung). Bei Zuggleichheit von FS und FB ist auch der backbordseitige Motor 26A abgekuppelt (Kupplung 28A) und festgebremst (Bremse 26B) und die Haupttrommel 28B wird durch ihre Bandbremse 28C gehalten. Die Bandbremse 28C ist dabei auf den gleichen Seilzug eingestellt wie die Bandbremse 34C. Bei Zugabweichungen von FS und FB wird der Motor 26A eingeschaltet und eingekuppelt, die Bremse 26B und die Bandbremse 28C werden gelüftet. Je nach Zugabweichung arbeitet der Motor 26A im Rechts- oder im Linkslauf und wirft damit Seil aus oder holt es ein. Die Höhe der Motordrehzahl hängt von der Höhe der Zugdifferenz $|FS - FB|$ ab. Die Zugdifferenz FS - FB wird vom Zugregler 38A ermittelt und an die Motorsteuerung von Motor 26A weitergeleitet.

In Fig. 2 sind ferner die gemessene ausgeworfene Seillänge LB der Kurrleine 29 auf der Backbordseite, die gemessene ausgeworfene Seillänge LS der Kurrleine 35 auf der Steuerbordseite sowie die meßbare Seillängendifferenz LD zwischen beiden Kurrleinen 29, 35 dargestellt.

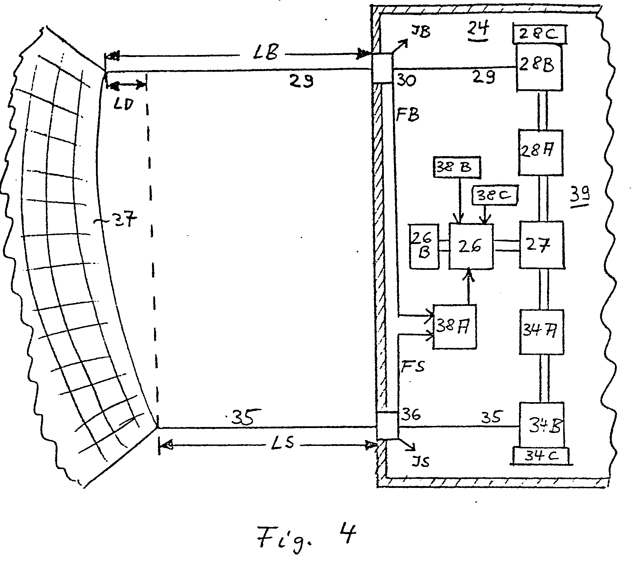

Nachfolgend wird die Funktionsweise der erfindungsgemäßen Einrichtung für das Fischen mit Split-Trawl-Winden
auf Hecktrawlern beschrieben. Zur Erläuterung hierzu
sind in Fig. 3 die Seillängen LS, $X_{min}$, XS - $\triangle$ XS,
XS - dXS, XS + dXS und XS + $\triangle$ XS der Kurrleine 35 dargestellt. Das Arbeitsspiel der Split-Trawl-Winden 25 und
31 während des Fischens besteht aus drei Abschnitten,
dem Ausbringen des Schleppnetzes 37, dem Schleppen
selbst und dem Einholen des Schleppnetzes 37. In allen
drei Abschnitten wird der Zug in beiden Seilen durch
eine Regelung gleichgehalten. Zum Ausbringen bzw.
Einholen des Schleppnetzes 37 werden die Kurrleinen 29
und 35, deren maximale Länge ca. 2500m bis 5000m beträgt, auf die Haupttrommeln 28B und 34B der
Split-Trawl-Winden 25 und 31 ab- bzw. aufgespult. Die
erfindungsgemäße Einrichtung dient zum automatischen
Ausbringen des Schleppnetzes 37 auf eine einstellbare
Länge XS der Kurrleinen 29 und 35 bei gleichem Zug in
beiden Kurrleinen, zum automatischen Offenhalten des
Schleppnetzes 37 während des Fischens, auch bei Auftreten von Störeinflüssen, wie Kurvenfahrt, Seegang, Strömung usw. und zum automatischen Einholen des Schleppnetzes 37 nach dem Schleppen, wobei das Einholen mit
konstanter Leistung bei gleichen Seilzügen erfolgt. In
allen drei Arbeitsabschnitten werden jeweils die Seillängen erfaßt und entsprechende Alarm- bzw. Freigabesignale erteilt.

Zu Beginn des Fischens werden die Hauptzähler 1 und 14
mit Rücksetzsignalen Res zum Setzen des Zählers auf Null
beaufschlagt. Ferner werden die vorgebbaren Werte XS und
XD eingestellt. Die Werte XS und XD werden angezeigt.
Die Werte $X_{min}$, $\triangle$ XS und dXS werden bei der Inbetriebnahme - entsprechend den Erfordernissen - einmal fest
eingestellt und danach nicht mehr verändert (Festwerte).
Gegebenenfalls erfolgt eine Justierung der beiden Zähler 1 und 14 mittels der Justiersignale AU, AD.

Um aus dem Gefahrenbereich der Schiffsschraube herauszukommen, wird das Netz anfangs "von Hand" ausgelegt. Die "von Hand" ausgelegten Seillängen werden dabei mit Hilfe der Ablaufrollen 30 und 36 erfaßt und entsprechende Impulse IS, IB an die Zähler 1 und 14 geleitet. Ist der festgelegte Wert $X_{min}$ (z.B. 50m) an beiden Seilen 29 und 35 erreicht, d.h. $LS = X_{min}$ so erfolgt über die beiden Vergleicher 4 und 16 sowie das nachgeschaltete UND-Glied 5 die Freigabe zum automatischen Auslegen (Signal SF).

Die Geschwindigkeit des automatischen Auslegens der Seile 29 und 35 wird durch die Schiffsgeschwindigkeit bestimmt. Der Seilzug ist an beiden Seilen 29, 35 gleich und wird über den gemeinsamen Strom-Sollwertgeber 38C den Motoren vorgegeben. Die Motoren 26A, 32A werden dabei in Richtung "Hieven" beaufschlagt. Da jedoch über den vorgegebenen Strom-Sollwert ein reduziertes Motormoment (z.B. 30% des Nennwertes) eingestellt ist, können die Motoren kein Seil einholen und werden vom Seilzug (hervorgerufen durch die Schiffsgeschwindigkeit) entgegen ihrer natürlichen Motordrehrichtung angetrieben. Erreicht die steuerbordseitige Kurrleine 35 den Wert $LS = XS - \Delta XS$ (siehe auch Fig. 3), was durch den Subtrahierer 7 mit nachgeschaltetem Vergleicher 6 festgestellt wird, so zeigt ein Signal SR1 (Meldeleuchte oder Hupe) an, daß die vorgewählte auszuwerfende Seillänge XS gleich erreicht wird, und die Schiffsgeschwindigkeit - falls sie zu groß oder auch zu klein ist - dem automatischen Trawlen anzupassen ist.

Wird mit einer dem automatischen Trawlbetrieb angepaßten Schiffsgeschwindigkeit die Seillänge $LS = XS - dXS$ erreicht (siehe auch Fig. 3), was durch den Subtrahierer 9 mit nachgeschaltetem Vergleicher 8 festgestellt wird, so gehen die Winden 28B, 34B in den automatischen Trawlbetrieb über (Signal ST), wobei der Seilzug an beiden Haupttrommeln 28B und 34B auf gleiche Werte geregelt wird. Die steuerbordseitige Haupttrommel 34B dient als Leittrommel 34B, die backbordseitige Haupttrommel 28B dient als Folgetrommel. Bei gleichem Zug beider Kurrleinen sind beide Trommeln auf ihre Bandbremse 34C bzw. 28C geschaltet, deren Bremskraft pneumatisch einstellbar ist und dem vorgegebenen Seilzug entspricht. Die Kupplungen trennen die Trommeln von den Getrieben 33 bzw. 27, die Motoren 32A bzw. 26A sind über ihre Bremsen 32B, 26B festgebremst. Dabei werden, wie auch in den weiteren Bereichen, die ausgeworfenen Seillängen LS und LB angezeigt.

Wird im Bereich LS = XS ± dXS die Schiffsgeschwindigkeit nicht an die für das automatische Trawlen erforderliche Geschwindigkeit angepaßt, so wird der Bereich LS = XS ± dXS, in dem der automatische Trawlbetrieb möglich ist, wieder verlassen. Das Erreichen des Wertes LS = XS ± dXS wird durch den Addierer 11 mit nachgeschaltetem Vergleicher 10 festgestellt. Es ertönt ein Signal SR2 (z.B. Meldeleuchte), das zur Reduzierung der Schiffsgeschwindigkeit auffordert. Desweiteren werden die Motoren – wie bereits für das automatische Seilauswerfen beschrieben – in Richtung Hieven beaufschlagt, ebenfalls bei reduziertem Motordrehmoment. Die Schiffsgeschindigkeit muß im Bereich $XS + \triangle XS < LS < XS + dXS$ jetzt soweit reduziert werden, daß der durch die Schiffsgeschwindigkeit hervorgerufene Seilzug kleiner als das Motordrehmoment wird. Die Motoren drehen dann in ihrer natürlichen Motordrehrrichtung und es wird Seil eingeholt. Der Bereich $XS + dXS < LS < XS - dXS$ für das automatische Trawlen wird so wieder erreicht.

Wird das Schleppnetz 37 jedoch infolge weiterhin zu hoher Schiffsgeschwindigkeit weiter herausgezogen, so ertönt bei Erreichen des Wertes LS = XS + $\triangle$ XS ein erneuter Alarm SR3 (z.B. Horn) zur weiteren Reduzierung der Schiffsgeschwindigkeit. Das Erreichen des Wertes LS = XS + $\triangle$ XS (siehe auch Fig. 3) wird durch den Addierer 13 mit nachgeschaltetem Vergleicher 12 festgestellt. Der Bereich XS + $\triangle$ XS $<$ LS $<$ XS + dXS dient im wesentlichen zur Anpassung der Schiffsgeschwindigkeit, um den zum automatischen Trawlen erforderlichen Seilzug zu erreichen.

Da die beiden Split-Trawl-Winden 25 und 31 auf gleichen Zug beider Seile arbeiten, können sich unterschiedliche Seillängen einstellen. Dabei ist es wichtig, die Differenz der Seillängen von Steuerbord- und Backbordseite zu kontrollieren. Der momentane absolute Differenz-Istwert LD = $|$LS - LB$|$ wird mittels des Subtrahierers 18 gebildet und mit Hilfe der Anzeigevorrichtung 20 angezeigt. Der Vergleicher 21 vergleicht dabei die Werte LS mit LB und zeigt mittels der ausgegebenen Signale SB und SS an, welches der beiden ausgelegten Seile länger ist.

Die zulässige vorgegebene Seillängendifferenz XD wird mit Hilfe der Anzeigevorrichtung 17 angezeigt. Wird der Wert LD = XD überschritten, was durch den Vergleicher 19 festgestellt wird, so wird ein Alarmsignal SÜ (z.B. Horn) abgegeben und das automatische Trawlen wird abgeschaltet.

Falls es infolge Seitenströmung, Kurvenfahrt usw. während des Fischens erforderlich ist, mit sehr großen unterschiedlichen Seillängen der Kurrleinen 29 und 35 zu trawlen, so besteht die Möglichkeit, den momentanen Seillängen-Differenzwert LD auf Null zu setzen. Durch Betätigung des Schalters 22A und des Tasters 22C wird die momentan vom Subtrahierer 18 festgestellte Seillängendifferenz LD ignoriert, d.h. die eingestellte zulässige Differenz XD gilt jetzt von der neuen Pseudo-Null-Differenz an. Die Anzeigevorrichtung 20 zeigt
jetzt Null an.

Nach erfolgtem Fischen wird das Schleppnetz 37 wieder
eingeholt. Das Einholen erfolgt mit maximal möglicher
gleicher Seilgeschwindigkeit beider Seile, vorgegeben
durch den gemeinsamen Drehzahl-Sollwertgeber 38B, und
mit gleichen Seilzügen, vorgegeben durch den gemeinsamen
Strom-Sollwertgeber 38C. Beiden Motoren wird die maximal
mögliche Feldschwächdrehzahl vorgegeben. Die Strom-Sollwerte sind abhängig von der Motordrehzahl. Dadurch wird
eine Drehmomenthyperbel (konstante Leistung) durchfahren. Da stets mit der maximal möglichen Geschwindigkeit
Seil eingeholt wird, wird das Netz geschont.

Falls beim Hieven des Netzes der Wert $X_{min}$ unterschritten wird, so entfällt das Freigabesignal SF und die Antriebe (Motoren 26A, 32A) werden abgeschaltet. Das Netz
muß "von Hand" eingeholt werden (Sicherheitsabstand zur
Schraube).

In Fig. 4 ist ein Hecktrawler 24 mit Monoblockwinde 39
dargestellt. Der Hecktrawler 24 besitzt sowohl auf der
Backbordseite als auch auf der Steuerbordseite von einem
gemeinsamen Motor abtrennbare Trommeln, wobei die
steuerbordseitige Trommel als Führungstrommel und die
backbordseitige Trommel als Folgetrommel arbeitet.

Die Monoblockwinde 39 besteht aus einem Motor 26 mit
angebauter Bremse 26B, einem Getriebe 27, einer backbordseitigen Kupplung 28A für die backbordseitige
Haupttrommel 28B mit angebauter pneumatisch steuerbaren
Bandbremse 28C und einer steuerbordseitigen Kupplung 34A

675/81 14 0079069

für die steuerbordseitige Haupttrommel 34B mit angebauter pneumatisch steuerbarer Bandbremse 34C. Die
Haupttrommeln 28B, 34B dienen zur Auf/Abwicklung der
Kurrleinen 29, 35. Die Kurrleinen 29, 35 werden, wie
bereits beschrieben, über Ablaufrollen 30, 36 geführt,
die Impulse IS, IB zu den Hauptzählern 14, 1 sowie
Seilzüge FS, FB zu dem Zug-Regler 38A liefern. Der
Zug-Regler vergleicht beide Werte miteinander und meldet
eine auftretende Zugdifferenz der Motorsteuerung des
Motors 26.

Die Motorsteuerung ist ferner mit einem Drehzahl-Sollwertgeber 38B und einem Strom-Sollwertgeber 38C verbunden.

Die Kurrleinen 29, 35 sind, wie bereits unter Fig. 2 beschrieben, mit dem Schleppnetz 37 verbunden. Desweiteren
sind in Fig. 4 die gemessenen ausgeworfenen Seillängen
LB und LS sowie die Seillängendifferenz LD eingetragen.

Beim automatischen Auswerfen bzw. Einholen des Netzes 37
ist eine Drehzahl- bzw. Stromregelung (Sollwertgeber
38B, 38C) im Einsatz. Beide Haupttrommeln 28B, 34B sind
dabei über ihre Kupplungen 28A, 34A und das Getriebe 27
mit dem Motor 26 verbunden.

Während des automatischen Trawlens ist der Zug FS des
Steuerbordseiles 35 der Sollwert für den Zug des Backbordseiles 29. Der Motor 26 ist beim automatischen
Trawlen bei Zugabweichungen FS - FB über die Kupplung
28A mit der backbordseitigen Haupttrommel 28B, die jetzt
als Folgetrommel arbeitet, verbunden. Die steuerbordseitige Haupttrommel 34B ist über die Kupplung 34A vom
Motor 26 abgekuppelt und wird von der Bandbremse 34C
gehalten. Bei Überschreiten des an der Bandbremse 34C
eingestellten gewünschten Seilzuges rutscht die Bandbremse durch und gibt Seil frei.

Der mit der Haupttrommel 28B verbundene Motor 26 arbeitet während des automatischen Trawlbetriebes im Rechts- oder Linkslauf und wirft damit Seil aus oder holt es ein. Die Höhe der Motordrehzahl hängt von der Zugdifferenz FS - FB ab. Bei Zuggleichheit beider Seile ist auch die Folgetrommel 28B vom Motor abgekuppelt (der Motor 26 wird anschließend durch die Bremse 26B festgebremst) und wird durch ihre Bandbremse 28C gebremst. Die Bandbremse 28C ist dabei auf den gleichen Seilzug eingestellt wie die Bandbremse 34C. Bei Zugabweichung wird der Motor 25 wieder eingekuppelt (Kupplung 28A) und die Bremsen 26B, 28C werden gelüftet.

Die Funktionsweise der Einrichtung für das Fischen mit Monoblockwinden ist ansonsten gleich der für Split-Trawl-Winden beschriebenen Funktionsweise. Das automatische Ausbringen und Einholen des Schleppnetzes 37 erfolgt jedoch nicht bei gleichem Zug an beiden Kurrleinen 29, 35 (da lediglich ein Motor 26 vorhanden ist). Der Strom und damit der Seilzug wird hierbei über den Strom-Sollwertgeber 38C eingestellt. Bei Erreichen der Seillänge LS = XS - dXS wird der Motor 26 abgeschaltet und das automatische Trawlen muß von Hand eingeleitet werden.

675-81

0079069

16

<u>A n s p r ü c h e</u>

1. Verfahren zur Regelung der Haupttrommeln eines Hecktrawlers, bei dem auf der Steuerbordseite und der Backbordseite je eine eigene Haupttrommel zum Auf/Abwickeln der mit einem Schleppnetz verbundenen Kurrleinen vorgesehen ist, die mittels einer Bandbremse bremsbar und über eine Kupplung mit einem Motor verbindbar ist, <u>dadurch gekennzeichnet,</u> daß der Trawlerbetrieb bei gleichem Seilzug der beiden Kurrleinen erfolgt.

2. Verfahren nach Anspruch 1, dadurch gekennzeichnet, daß der Seilzug der ersten Kurrleine als Sollwert für den Zug der zweiten Kurrleinen herangezogen wird, bei gleichem Zug in beiden Kurrleinen beide Trommeln vom Motor abgekuppelt und auf ihre einstellbaren Bandbremsen geschaltet werden und zur Ausregelung von Seilzugdifferenzen die als Folgetrommel dienende Haupttrommel der zweiten Kurrleine an den Motor angekuppelt und durch diesen angetrieben wird, während die als Führungstrommel dienende Haupttrommel der ersten Kurrleine festgebremst bleibt.

3. Verfahren nach Anspruch 1, dadurch gekennzeichnet, daß der (die) Motor(en) beim Auslegen der Kurrleinen in Richtung Hieven mit reduziertem Motormoment beaufschlagt wird (werden).

4. Verfahren nach Anspruch 1, dadurch gekennzeichnet, daß der (die) Motor(en) beim Seileinholen mit konstanter maximaler Leistung betrieben wird (werden), wobei die maximal mögliche Feldschwächdrehzahl vorgegeben wird und der drehzahlabhängige Stromsollwert entsprechend einer Drehmomentenhyperbel nachgeführt
wird.


5. Einrichtung zur Durchführung des Verfahrens nach
einem der vorstehenden Ansprüche, gekennzeichnet durch
folgende Merkmale:

- es sind Hauptzähler (1,14) zur Erfassung der ausgeworfenen Seillänge an der Steuerbordseite (LS) und
  der Backbordseite (LB) des Hecktrawlers (24) vorgesehen,

- es sind backbordseitig und steuerbordseitig Seilzug-Erfassungsgeräte (30,36) vorgesehen,

- es werden eine auszuwerfende Seillänge (XS) der
  Führungstrommel (34B), eine zulässige Seillängendifferenz (XD) zwischen den ausgeworfenen Seillängen von Führungs- (34B) und Folgetrommel (28B),
  eine Anpaß-Seillänge ($\Delta$XS) der Führungstrommel sowie eine Grenzlänge (dXS) der Führungstrommel für
  automatischen Trawlbetrieb vorgegeben,

- es sind ein Subtrahierer (7) und ein Addierer (13)
  mit jeweils nachgeschalteten Vergleichern (6,12)
  zur Überwachung des durch die vorgegebene An-
  paß-Seillänge ($\Delta$XS) bestimmten Bereiches
  (XS $\pm$ $\Delta$XS) vorgesehen, wobei bei Übereinstimmung
  der momentan ausgelegten Führungstrommel-Seillänge
  (LS) mit der unteren bzw. oberen Bereichsgrenze
  (XS - $\Delta$XS, XS + $\Delta$XS) ein Signal (SR1, SR3) zur
  Anpassung bzw. Reduzierung der Schiffsgeschwindigkeit abgegeben wird,

- es sind ein Subtrahierer (9) und ein Addierer (11)
  mit jeweils nachgeschalteten Vergleichern (8,10)
  zur Überwachung des durch die vorgegebene Grenzlänge (dXS) bestimmten Bereiches (XS $\pm$ dXS) vorgesehen, wobei bei einer momentan ausgelegten Führungstrommel-Seillänge (LS) innerhalb des Bereiches
  zwischen der unteren bzw. der oberen Bereichsgrenze

675-81

18

0079069

(XS - dXS bzw. XS + dXS) ein Signal (ST) den automatischen Trawlbetrieb freigibt bzw. bei Überschreiten der oberen Bereichsgrenze ein Signal (SR2) den automatischen Trawlbetrieb sperrt und zur Reduzierung der Schiffsgeschwindigkeit auffordert.

6. Einrichtung nach Anspruch 5, dadurch gekennzeichnet, daß eine Seillänge ($X_{min}$) zum Auslegen bzw. Einholen des Seiles von Hand vorgegeben wird und ein steuerbordseitiger (4) und ein backbordseitiger Vergleicher (16) vorgesehen sind, die über ein nachgeschaltetes UND-Glied (5) ein Freigabesignal (SF) zum automatischen Auslegen des Seiles abgeben, falls die ausgelegten Seillängen (LS,LB) die vorgegebene Seillänge ($X_{min}$) überschreiten.

7. Einrichtung nach wenigstens einem der vorstehenden Ansprüche, dadurch gekennzeichnet, daß ein Subtrahierer (18) zur Bildung der Seillängen-Differenz (LD) zwischen ausgelegter steuerbordseitiger und backbordseitiger Kurrleine vorgesehen ist.

8. Einrichtung nach Anspruch 7, dadurch gekennzeichnet, daß einem Vergleicher (19) die vorgegebene zulässige (XD) und die gemessene Seillängendifferenz (LD) zugeführt werden und der Vergleicher (19) bei Überschreiten des zulässigen Wertes (XD) ein Signal (SÜ) abgibt, das den automatischen Trawlbetrieb beendet.

9. Einrichtung nach wenigstens einem der vorstehenden Ansprüche, dadurch gekennzeichnet, daß die gemessenen ausgeworfenen steuerbordseitigen (LS) und backbordseitigen Seillängen (LB), die vorgegebene auszuwerfende Seillänge (XS), die vorgegebene zulässige Seillängendifferenz (XD) sowie die gemessene Seillängendifferenz (LD) mit Hilfe von Anzeigevorrichtungen (2,15,3,17,20)

675-81

0079069

zur Anzeige gebracht werden.

10. Einrichtung nach wenigstens einem der vorstehenden Ansprüche, dadurch gekennzeichnet, daß ein Vergleicher (21) für die gemessenen steuerbordseitigen (LS) und backbordseitigen Seillängen (LB) vorgesehen ist, der je nach größerer Steuerbord- bzw. Backbord-Seillänge unterschiedliche Signale (SS bzw. SB) abgibt.

Fig. 1

Fig. 2

Fig. 3

Fig. 4